# EUROPÄISCHE PATENTSCHRIFT

(11) **EP 0 780 403 B1**
(45) Veröffentlichungstag und Bekanntmachung des Hinweises auf die Patenterteilung: **12.09.2001**
(21) Anmeldenummer: 96120038.3
(22) Anmeldetag: 13.12.1996
(51) Int. Cl.: C08F 8/30

(54) **Verfahren zur Nachbehandlung von thermoplastischen Fluorpolymeren**
Process for post-treating thermoplastic fluoropolymers
Procédé pour post-traiter des polymères thermoplastiques fluorés

(30) Priorität: 21.12.1995 DE 19547909
(43) Veröffentlichungstag der Anmeldung: 25.06.1997
(60) Teilanmeldung: 00121545.8
(73) Patentinhaber: Dyneon GmbH & Co. KG, 84504 Burgkirchen (DE)
(72) Erfinder: Goldmann, Gerhard, Dr., 84524 Neuötting (DE); Hintzer, Klaus, Dr., 84556 Kastl (DE); Löhr, Gernot, Dr., 84508 Burgkirchen (DE); Mayer, Ludwig, Dr., 84508 Burgkirchen (DE)

(56) Entgegenhaltungen:
- EP-A- 0 178 935
- EP-A- 0 769 517
- GB-A- 864 537

## Beschreibung

Thermoplastische Fluorpolymere werden für die Verarbeitung weitgehend in Form von Schmelzgranulaten eingesetzt. Sowohl bei der Aufarbeitung der Polymerisate in der Schmelzgranulierung als auch bei der Weiterverarbeitung der Granulate durch Transfermoulding oder Schmelzextrusion erleiden die Fluorpolymere einen thermischen Abbau, wenn sie nicht über stabile perfluorierte Endgruppen verfügen.

Dieser Abbau erfolgt in erster Linie vom Kettenende her, aber auch durch Kettenbruch. Der Kettenbruch beziehungsweise die Erniedrigung des mittleren Molekulargewichts ist erkennbar an der Verringerung der Schmelzviskosität. Der Abbau vom Kettenende her ist erkennbar durch die Abspaltung gasförmiger Zersetzungsprodukte, die bei der Verarbeitung in den Erzeugnissen Blasen hervorrufen können.

Thermisch instabile Kettenenden können durch die unterschiedlichen Herstellungsweisen bedingt sein. Solche Endgruppen entstehen einerseits durch den jeweils benutzten Initiator, wie zum Beispiel fluorierte Peroxide (US-A-3 642 742) oder Persulfate (US-A-3 635 926), wobei die primär entstehenden Sulfatestergrupppen zu Carboxylgruppen momentan hydrolysieren, andererseits durch den jeweils benutzten Kettenüberträger und im Falle der Copolymerisation mit Perfluoralkylvinylethern durch Kettenübertragung des betreffenden Etherradikals (US-A-3 642 742). Im letzteren Fall entstehen in Abwesenheit von Wasser Carbonylfluorid(-CO-F)-Gruppen.

So ist es beispielsweise aus der EP-A-178 935 bekannt, daß bei der Herstellung von Copolymeren aus Tetrafluorethylen und Perfluor(alkyl-vinyl)ethern der Einsatz von Alkoholen wie Methanol als Kettenüberträger zu Methylester- und Carbinol-Endgruppen führt. Zusätzlich entstehen auch -CO-F- und -COOH-Endgruppen. Diese werden durch Behandlung der festen Polymerisate mit gasförmigem Ammoniak oder aber mit ammoniakabspaltenden Verbindungen wie Ammoniumsalzen, Harnstoff oder Biuret in stabilere Carbonamidgruppen überführt. Bei Verwendung von Ammoniak abspaltenden Verbindungen wird die Behandlung in der Schmelze, bei Verwendung von gasförmigem Ammoniak bei Temperaturen unterhalb des Schmelzpunktes durchgeführt. Hierbei werden die -CO-F- und die -COOH-Gruppen in Carbonamidgruppen umgewandelt, während die durch den Kettenüberträger Methanol entstandenen Endgruppen nicht verändert werden. Die Eliminierung der sauren Endgruppen hat einen stabilisierenden Effekt auf die Themostabilität der Carbinolgruppen. Außerdem wird bei dieser Behandlung der Gehalt an extrahierbaren Fluoridionen signifikant erniedrigt. Das Polymerisat ist dadurch weitgehend frei von den bei manchen Anwendungen störenden anorganischen Salzen, da deren Bildung bei der Herstellung nach dem aus der US-A-3 642 742 bekannten Verfahren, nämlich der Polymerisation in einem perfluorierten Lösemittel oder einem Fluorchlorkohlenwasserstoff und einem organischen Peroxid als Initiator, vermieden wird. Perfluorierte Lösemittel sind aber teuer und Fluorchlorkohlenwasserstoffe unerwünscht.

Es sind noch weitere Verfahren im Zusammenhang mit Carbonamid-Endgruppen beschrieben:

Aus der EP-B-220 910 ist es bekannt, daß bei der Polymerisation im wäßrigen Medium die Verwendung von Ammoniumsalzen als Polymerisationspuffer zu Ammoniumcarboxylat-Endgruppen führt, die bei der thermischen Nachbehandlung in - dort als labil angesehene - Carbonamid-Endgruppen überführt werden. Die schmelzverarbeitbaren Copolymeren werden deshalb zunächst mit Fluor und anschließend mit einem Inertgas nachbehandelt, bis das Produkt auf 10⁶ Kohlenstoffatome weniger als 6 Endgruppen -CF₂CH₂OH, -CONH₂ und -COF enthält.

Aus der EP-A-457 255 ist ein Verfahren bekannt, bei dem ein Copolymeres aus Tetrafluorethylen und einem Perfluor(alkyl-vinyl)ether zunächst mit Fluor und anschließend mit gasförmigem Ammoniak oder einer gasförmigen stickstoffhaltigen Verbindung, die Ammoniak abspalten kann, behandelt wird. Hierdurch wird ein Gehalt an Carbonamid-Endgruppen auf 7 bis 20 pro 10⁶ Kohlenstoffatome verringert und Carbinol- und Säurefluorid-Endgruppen werden praktisch eliminiert.

Es ist nicht bekannt, wie bei der Polymerisation die Bildung von instabilen Endgruppen vermieden werden könnte. So entstehen bei der Polymerisation in nichtwäßrigen Medien Säurefluorid-Endgruppen durch Kettenübertragung.

Bei der Herstellung der Copolymeren durch wäßrige radikalische Polymerisation unter Einsatz von wasserlöslichen Peroxid-Initiatoren werden als Endgruppen überwiegend Carboxylgruppen (und in ammoniakalischen Reaktionslösungen auch Carbonsäureamidgruppen) gebildet. Bei der Schmelzgranulierung decarboxylieren die Säuregruppen, wobei unter Abspaltung von Fluorwasserstoff und Kohlendioxid endständig eine Doppelbindung gebildet wird, die durch Luftsauerstoff oxidiert wird, wobei unter Abspaltung von Carbonylfluorid eine Säurefluorid-Endgruppe gebildet wird. Diese ist ihrerseits thermisch instabil und kann unter Abspaltung von Carbonylfluorid erneut eine Doppelbindung bilden, wodurch sich der Zyklus wiederholen kann. Weiterhin kann das endständig doppelgebundene Kohlenstoffatom als Difluorcarben abgespalten werden, das sich zu Homologen der Fluorolefine addieren und dabei auch das sehr toxische Perfluorisobutylen bilden kann.

Die bei diesen hier nur beispielhaft angeführten Zersetzungsreaktionen sich bildenden Gase müssen also aus vielerlei Gründen durch eine geeignete Nachbehandlung entfernt werden. Geeignet ist die Entgasung bei etwa 100 bis 200 °C unter Durchblasen von Luft oder Inertgasen, wobei aber die Säurefluoridgruppen im wesentlichen erhalten bleiben. Diese Gruppen hydrolysieren mit dem Feuchtigkeitsgehalt der Luft schon bei der Lagerung unter Abspaltung des toxischen und korrosiven Fluorwasserstoffs. Diese Schwierigkeiten, die natürlich bei der Handhabung und Verarbeitung noch vermehrt auftreten würden, sind nicht hinnehmbar. Wirksamer ist eine Entgasung in heißem Wasser, bei der Säurefluoridgruppen vollständig hydrolysiert werden und der entstehende Fluorwasserstoff in der wäßrigen Phase verbleibt. Außerdem werden bei der Nachbehandlung mit Wasser die anorganischen Salze weitgehend aus dem Schmelzgranulat extrahiert. Da hierbei aber das Wasser in das kompakte Schmelzgranulat hineindiffundieren muß, das heißt die Reaktion durch die Diffusion kontrolliert wird, ist dieses Verfahren sehr zeitraubend. Weiterhin werden an das Behältermaterial wegen der Korrosivität des Fluorwasserstoffs hohe Anforderungen gestellt.

Es wurde nun gefunden, daß eine Nachbehandlung eines Fluorthermoplasten mit einer wäßrigen, Ammoniak enthaltenden Lösung zu einer unerwartet hohen Beschleunigung der Nachbehandlung führt und die Korrosion des hierbei verwendeten Behälters weitgehend unterdrückt. So behandelte Schmelzgranulate zeigen keine Verfärbung und haben einen niedrigeren Schwermetallgehalt. Bei der Weiterverarbeitung, insbesondere beim Transfermoulding, verursachen sie weniger Korrosion bei den Formteilen und zeigen eine bessere Entformbarkeit. Metallkontaminierte Produkte können eine leicht rosa bis braune Verfärbung zeigen, die bei erfindungsgemäß behandelten Produkten nicht festgestellt werden konnte.

Die wäßrige Nachbehandlung bringt den zusätzlichen Vorteil mit sich, daß im Produkt von der Herstellung her enthaltene Salze extrahiert werden. Solche Salze werden beispielsweise aus den wasserlöslichen Initiatoren gebildet. Salze werden auch als Hilfsmittel bei den wäßrigen Polymerisationsverfahren eingesetzt, beispielsweise als Puffer. Diese Salze sind schwer flüchtig und verbleiben deshalb auch bei einer thermischen Nachbehandlung im Produkt. Sie stören insbesondere bei anspruchsvollen Einsatzgebieten wie in der Elektronik.

Die Erfindung betrifft ein Verfahren zur Nachbehandlung eines thermoplastischen Fluorpolymers, dadurch gekennzeichnet, dass das Schmelzgranulat oder ein Formkörper aus dem thermoplastischen Fluorpolymer mit einer wäßrigen, Ammoniak enthaltenden Lösung behandelt wird.

Die Carbonamid-Endgruppen sind bei der Weiterverarbeitung infolge der notwendigen hohen Verarbeitungstemperaturen nicht hinreichend thermisch stabil. So werden beim Transfermoulding nach üblicher Verfahrensweise etwa 2/3 der Amidgruppen, beim Spritzgießen praktisch alle Amidgruppen zerstört und durch -CO-F- beziehungsweise -COOH-Gruppen ersetzt. Nach einer weiteren Ausführungsform der Erfindung werden deshalb Endartikel, insbesondere dünnwandige Formkörper, nachbehandelt. Man kann beispielsweise die frisch geformten Artikel in eine wäßrige, Ammoniak enthaltende Lösung eintauchen oder aber bereits abgekühlte Formkörper bei Raumtemperatur oder höherer Temperatur nachbehandeln.

Die Verhinderung der Korrosion vermeidet natürlich auch die bisher nötigen häufigen Reinigungen des Kessels und die dadurch bedingten Stillstände der Anlage. Durch die quantitative Entfernung störender, labilerer Endgruppen tritt - wie schon erwähnt - auch geringere Korrosion bei der Verarbeitung der Polymerisate auf und weiterhin zeigt sich bei der Verarbeitung durch Transfermoulding, daß die geformten Artikel sich leicht aus der Form entfernen lassen. Weiterhin wird die Neigung zur Blasenbildung verringert.

Das nachzubehandelnde Fluorpolymer kann in Form des Schmelzgranulats vorzugsweise in einer Körnung von etwa 1 bis 3 mm vorliegen.

Die erfindungsgemäße Nachbehandlung des Fluorthermoplasten kann bei normalem Druck oder bei Überdruck erfolgen. Bevorzugt wird Normaldruck beziehungsweise autogener Druck. Die Temperatur liegt zweckmäßig in dem durch den Druck vorgegebenen oberen Bereich, bei Normaldruck also bei etwa 100 °C.

Bei der wäßrigen ammoniakalischen Nachbehandlung werden praktisch nur die -CO-F-Gruppen in Carbonamidgruppen umgewandelt. Frisches Schmelzgranulat enthält vorwiegend nur -CO-F-Gruppen. Die Umwandlung der -CO-F-Endgruppen in Carbonamidgruppen verläuft proportional zur Ammoniakkonzentration. Diese liegt über 0,1 g Ammoniak pro Liter, vorzugsweise bei 0,3 bis 250 g pro Liter (handelsübliche konzentrierte Lösung). Durch die Ammoniakkonzentration kann somit - wenn für spezielle Einsatzzwecke gewünscht - eine bestimmte Relation von Carbonamid- und Carboxyl-Endgruppen im Produkt eingestellt werden.

Als Ammoniak enthaltende Lösung sind auch Lösungen von Verbindungen zu verstehen, die Ammoniak freisetzen, zum Beispiel Ammoniumsalze schwacher Säuren wie Ammoniumcarbonat oder -carbaminat.

Als nachzubehandelnde Polymere kommen in erster Linie perfluorierte Thermoplaste wie Copolymere mit 75 bis 99 Gew.-% Einheiten des Tetrafluorethylens und Comonomeren aus der Reihe der Perfluorolefine mit 3 bis 8 Kohlenstoffatomen und Perfluor(alkyl-vinyl)ethern mit Alkylgruppen von 1 bis 4 Kohlenstoffatomen in Betracht, insbesondere Copolymerisate von Tetrafluorethylen mit Hexafluorpropen und vorzugsweise Perfluor(n-propylvinyl)ether. Das Verfahren ist auch auf Polymere anwendbar, die außer dem Tetrafluorethylen mehr als ein Comonomeres enthalten, bevorzugt sind aber die Bipolymeren, insbesondere diejenigen mit Perfluor(alkyl-vinyl)ether-Einheiten. Diese Copolymere enthalten bevorzugt 1 bis 10 Gew.-%, insbesondere 1 bis 5 Gew.-%, an Ether-Einheiten und 10 bis 25 Gew.-% an Hexafluorpropen-Einheiten.

Die Copolymeren werden nach bekannten Methoden hergestellt, insbesondere im wäßrigen Medium, die beispielsweise aus den oben angegebenen Druckschriften hervorgehen. Dort sind auch die Endgruppen-Bestimmungen beschrieben.

In den folgenden Beispielen wird die Erfindung näher erläutert.

### Beispiel 1

60 g frisches Schmelzgranulat eines Copolymeren mit einem Gehalt an 96,5 Gew.-% Tetrafluorethylen und 3,5 Gew.-% Perfluor(n-propyl-vinyl)ether werden in ein Gefäß aus nichtrostendem Stahl gefüllt, das 700 ml einer 12,5gew.%igen wäßrigen Ammoniaklösung enthält. Diese Mischung wird 8 Stunden bei Raumtemperatur schonend gerührt. Anschließend wird das Produkt durch Absaugen der Ammoniaklösung und Einblasen von trockener Luft getrocknet. Das trockene Produkt ist vollkommen geruchsfrei, das heißt, es haftet kein Fluorwasserstoff an.

Das eingesetzte Schmelzgranulat enthält 65 -COF-Gruppen pro 10⁶ Kohlenstoffatome und keine Amidgruppen. Das erfindungsgemäß erhaltene Produkt enthält keine -COF-Gruppen und 67 Carbonamidgruppen pro 10⁶ Kohlenstoffatome.

Im Gegensatz zu den Angaben in der EP-A-457 255 enthält ein aus einem erfindungsgemäß behandelten Polymer hergestellter Formkörper keine Blasen.

In der folgenden Tabelle 1 sind die Ergebnisse analoger Versuche enthalten, wobei Proben nach verschiedenen Behandlungszeiten entnommen wurde, um die Halbwertszeit der Reaktion abzuschätzen.

In der Tabelle 1 bedeuten:
- In der Spalte "Beispiele" ist A das Ausgangsmaterial und V1 und V2 bezeichnen Vergleichsversuche mit Wasser.
- "Konzentration" bezieht sich auf das Agens, hier also Ammoniak, in Gew.-%.
- Die angegebenen Endgruppen, jeweils bezogen auf 10⁶ Kohlenstoffatome, werden durch IR-Absorption in bekannter Weise bestimmt (EP-B-220 910, Seite 4; EP-A-457 255, Seite 4). Die Diskrepanz in der Summe der Endgruppen ergibt sich daraus, daß als "-COOH" nur isolierte, nicht aber assoziierte Gruppen erfaßt werden.
- "HWZ" bedeutet die ermittelte Halbwertszeit in Stunden, abgeschätzt unter der Annahme einer Reaktion erster Ordnung.

**Tabelle 1**

| Beispiel | Konzentration [Gew.-%] | Dauer [h] | -COF | -COOH | -CONH₂ | HWZ |
|---|---|---|---|---|---|---|
| A | 0 | 0 | 65 | 42 | 0 | |
| V1 | 0 | 3 | 60 | 42 | 0 | 65 |
| V2 | 0 | 28 | 48 | 47 | 0 | 65 |
| 2 | 25 | 3 | 0 | 25 | 29 | 0,3 |
| 3 | 12,5 | 3 | 25 | 36 | 19 | 2,2 |
| 4 | 2,5 | 3 | 35 | 33 | 10 | 3,3 |

### Beispiele 5 und 6

Die Behandlung erfolgt analog Beispiel 1, anstelle der wäßrigen Ammoniaklösung wird jedoch eine wäßrige Lösung von Ammoniumcarbonat eingesetzt. Die Ergebnisse zeigt die Tabelle 2.

**Tabelle 2**

| Beispiel | Konzentration [Gew.-%] | Dauer [h] | -COF | -COOH | -CONH₂ | HWZ |
|---|---|---|---|---|---|---|
| 5 | 0,2 | 3 | 60 | 40 | 0 | 26 |
| 6 | 2 | 3 | 45 | 29 | 5 | 7 |

### Beispiel 7 bis 12

Die folgenden Beispiele zeigen die Variationsmöglichkeiten, die durch Wahl der Ammoniakkonzentration und der Behandlungstemperatur gegeben sind. Die Behandlung wird solange durchgeführt, bis im IR-Spektrum die -CO-F-Gruppen praktisch verschwunden sind.

**Tabelle 3**

| Beispiel | Konzentration [Gew.-%] | Temperatur [°C] | Dauer [h] | -CONH₂ |
|---|---|---|---|---|
| 7 | 0,03 | 90 | 6 | 7 |
| 8 | 0,06 | 90 | 6 | 10 |
| 9 | 0,125 | 90 | 6 | 15 |
| 10 | 2,5 | 25 | 12 | 20 |
| 11 | 10 | 25 | 9 | 29 |
| 12 | 25 | 25 | 3 | 29 |

## Patentansprüche

1. Verfahren zur Nachbehandlung eines thermoplastischen Fluorpolymers, **dadurch gekennzeichnet, dass** das Schmelzgranulat oder ein Formkörper aus dem thermoplastischen Fluorpolymer mit einer wäßrigen, Ammoniak enthaltenden Lösung behandelt wird.

2. Verfahren nach Anspruch 1, **dadurch gekennzeichnet, dass** die Behandlung bei 20 bis 130 °C erfolgt.

3. Verfahren nach Anspruch 1 oder 2, **dadurch gekennzeichnet, dass** die Ammoniakkonzentration in der Behandlungslösung ≥ 0,1 g pro Liter beträgt.

4. Verfahren nach Anspruch 3, **dadurch gekennzeichnet, dass** die Konzentration 0,3 bis 250 g pro Liter beträgt.

5. Verfahren nach einem oder mehreren der vorhergehenden Ansprüche, **dadurch gekennzeichnet, dass** das Copolymere 90 bis 99 Gew.-% Tetrafluorethylen und 1 bis 10 Gew.-% eines damit copolymerisierbaren fluorierten Olefins oder fluorierten Ethers enthält.

## Claims

1. A process. for the after-treatment of a thermoplastic fluoropolymer, which comprises treating the melt granules or a molding of the thermoplastic fluoropolymer with an aqueous, ammonia-containing solution.

2. The process as claimed in claim 1, wherein the treatment is carried out at from 20 to 130 °C.

3. The process as claimed in claim 1 or 2, wherein the ammonia concentration in the treatment solution is ≥ 0,1 g per liter.

4. The process as claimed in claim 3, wherein the concentration is from 0,3 to 250 g per liter.

5. The process as claimed in one or more of the preceding claims, wherein the copolymer comprises from 90 to 99 % by weight of tetrafluoroethylene and from 1 to 10 % by weight of a fluorinated olefin or fluorinated ether copolymerizable with tetrafluoroethylene.

## Revendications

1. Procédé de post-traitement d'un polymère fluoré thermoplastique, **caractérisé en ce que** le granulé fusible ou un objet moulé en le polymère fluoré thermoplastique est traité par une solution aqueuse contenant de l'ammoniac.

2. Procédé selon la revendication 1, **caractérisé en ce que** le traitement est effectué à une température de 20 à 130°C.

3. Procédé selon la revendication 1 ou 2, **caractérisé en ce que** la concentration de l'ammoniac dans la solution de traitement est ≥ 0,1 g par litre.

4. Procédé selon la revendication 3, **caractérisé en ce que** la concentration est de 0,3 à 250 g par litre.

5. Procédé selon l'une ou plusieurs des revendications précédentes, **caractérisé en ce que** le copolymère contient de 90 à 99 % en poids de tétrafluoréthylène et de 1 à 10 % en poids d'une oléfine fluorée ou d'un éther fluoré copolymérisable avec ce dernier.
